# EUROPÄISCHE PATENTSCHRIFT

(11) **EP 2 535 680 B1**
(45) Veröffentlichungstag und Bekanntmachung des Hinweises auf die Patenterteilung: **16.09.2015**
(21) Anmeldenummer: 12172165.8
(22) Anmeldetag: 15.06.2012
(51) Int. Cl.: G01B 9/02, G01N 21/88, G01B 11/06, G01B 11/24, G01N 21/47, G01N 21/84, G01N 21/95

(54) **Prüfvorrichtung zum Prüfen einer Verbindungsschicht zwischen waferförmigen Proben und Prüfverfahren zum Prüfen der Verbindungsschicht**
Test device for testing a connective layer between wafer-shaped samples and test method for testing the connective layer
Dispositif de contrôle d'une tige de liaison entre des échantillons en forme de rondelle et procédé de contrôle de la tige de liaison

(30) Priorität: 17.06.2011 DE 102011051146
(43) Veröffentlichungstag der Anmeldung: 19.12.2012
(73) Patentinhaber: Precitec Optronik GmbH, 63263 Neu-Isenburg (DE)
(72) Erfinder: Schönleber, Martin, 63743 Aschaffenburg (DE); Michelt, Berthold, 65195 Wiesbaden (DE)
(74) Vertreter: Schäfer, Horst

(56) Entgegenhaltungen:
- EP-A1- 2 159 535
- DE-C1- 19 525 770
- TW-A- 200 937 005
- US-A1- 2007 046 948
- US-A1- 2008 013 078
- US-A1- 2011 085 136

## Beschreibung

Prüfverfahren zum Prüfen einer Verbindungsschicht zwischen waferförmigen Proben.

Die Erfindung betrifft ein Prüfverfahren unter Verwendung einer Prüfvorrichtung zum Prüfen einer Verbindungsschicht zwischen waferförmigen Proben.

Die Prüfvorrichtung weist einen Messkopf für ein FD-OCT-Verfahren auf, der einen optischen Messstrahl auf einen Verbund aus mindestens zwei waferförmigen Proben mit dazwischen angeordneter Verbindungsschicht ausrichtet. Eine optische Strahlteilerebene ist ausgebildet zum Abzweigen eines optischen Referenzstrahls als Referenzarm für Abstandsmessungen.

Aus der Druckschrift F. Niklaus, G. Stemme, J.-Q. Lu und R. J. Gutmann "Adhesive Wafer Bonding", Journal of Applied Physics, Applied Physics Reviews - Focused Review, Vol. 99, No. 1, Seiten 031101.1 bis 031101.28, 2006, sind Anwendungen für Verbindungsschichten von waferförmigen Proben bekannt. Als Verbindungsschichten werden üblicherweise polymere Klebstoffschichten eingesetzt, die auf einen oder beide der waferförmigen Proben, die zu verbinden sind, aufgebracht werden. Nach dem Verbinden der Oberflächen der Proben, die mit dem polymeren Klebstoff bedeckt sind, wird Druck oder Kraft auf die waferförmigen Proben ausgeübt. Um den Verbindungsprozess zu verstärken, wird typischerweise zusätzlich eine Temperaturbehandlung durchgeführt.

Somit ist das Verbinden und Herstellen einer Verbindungsschicht zwischen waferförmigen Proben ein verhältnismäßig einfacher, robuster und kostengünstiger Prozess, wobei die Verbindungsfestigkeit und die Bildung von Hohlräumen an den zu verbindenden Oberflächen durch die Art des Polymerklebstoffs beeinflusst werden kann. Der Grad der Polymerisation des polymeren Klebstoffs, das waferförmige Probenmaterial, die Größe von Fremdpartikeln auf den Waferoberflächen und die Wafertopographie, die Polymerdicke, die Polymerviskosität während der Herstellung der Verbindungsschicht, auch der Verbindungsdruck, der auf die beiden waferförmigen Proben ausgeübt wird, bestimmen die Qualität der Verbindungsschicht. Während Fremdpartikel in der Verbindungsschicht, solange ihre Größe unter der Dicke der Verbindungsschicht bleibt, toleriert werden können, sind Hohlräume und Klebstoffabrisse innerhalb der Verbindungsschicht nicht tolerierbar und können zu Ausschuss führen.

In einigen Anwendungen der Halbleitertechnologie werden beispielsweise Siliziumwafer hergestellt und bearbeitet die eine Dicke in der Größenordnung von wenigen 10 µm (Mikrometern) bei Durchmessern von über 10 Zoll bzw. über 250 mm aufweisen. Derartige Siliziumwafer verhalten sich zum Beispiel wie eine Aluminiumfolie und können mit üblichen Werkzeugen nicht gehandhabt oder prozessiert werden. Derartige waferförmige Proben verwölben sich derart, dass sie nicht einmal in einer Waferkassette transportiert oder gelagert werden können. Daher werden derart dünne waferförmige Proben mithilfe der Verbindungsschicht auf einem Trägerwafer prozessiert, wobei ein dünner Nutzwafer mithilfe der Verbindungsschicht von einem stabilen Trägerwafer gehalten und stabilisiert wird.

Um derart dünne Wafer als Nutzwafer zu fertigen, hat sich ein Herunterschleifen des Nutzwafers auf die oben erwähnte wenige 10 µm Dicke bewährt. Nachdem vorher der Nutzwafer mit seiner fertig prozessierten Nutzfläche auf den Trägerwafer aufgeklebt ist, wird ein Verbund aus Verbindungsschicht und Wafern beim Herunterschleifen mithilfe der Verbindungsschicht zusammengehalten. Besonders beim Herunterschleifen sind Verbindungsschichtbereiche mit verminderter Klebeschichtdicke oder mit Abrissen oder mit Luftblasen in der Klebeschicht äußerst kritisch, da dort mechanische Spannungen auftreten, die den Nutzwafer zerstören können. Deshalb ist es von Vorteil flächendeckend und submillimetergenau aufgelöst die Klebstoffschicht noch vor dem Dünnschleifen nach Hohlräumen und Defekten abzusuchen.

Dazu können waferförmige Proben mit den oben angegebenen Durchmessern von beispielsweise mehr als 10 Zoll durch einen Spiralscan punktförmig abgetastet werden, was bei einer Rate von 4 kHz und 1 mm Schrittweite bei einem Durchmesser von 300 mm eine Prüfzeit von etwa 70 Sekunden beansprucht. Dabei wird vorzugsweise durch den Trägerwafer hindurch gemessen werden, weil eine optische Messung der Verbindungsschicht durch den Nutzwafers hindurch, aufgrund der Unebenheiten der Struktur und aufgrund der Inhomogenitäten der Lichtabsorption durch Dotierstoffe und aufgrund von Metallisierungen auf dem Nutzwafer als waferförmige Probe, nicht zuverlässig durchführbar ist.

Aus der Druckschrift WO 2006/028926 A1 ist ein Messkopf, der für ein OCT-Verfahren (optical coherence tomography), insbesondere für ein FD-OCT-Verfahren (frequency oder fourier domain optical coherence tomography) ausgebildet ist, bekannt.

Ein Messkopf des OCT-Verfahrens mit einem Referenzarm oder einer Referenzebene kann zusätzlich zu Messungen der Schichtdicke noch die Absolutabstände zwischen einer Referenzfläche und beliebigen Oberfläche eines Messobjektes erfassen. Dabei hat sich eine rotierende Scheibe, die in dem Referenzarm rotierend angeordnet ist, bewährt, weil mit dieser partiell beschichteten Scheibe eine Phasenverschiebung realisiert werden kann. Jedoch unterstützt diese Scheibe in keiner Weise eine Zuordnung und Klassifizieren von gemessenen Schichtdicken-Peaks und Abstands-Peaks, die ohne Vorkenntnisse über den Schichtaufbau eines Messobjektes nicht eindeutig einer Schichtdickenerfassung und einer Abstandserfassung zugeordnet werden können.

Weitere Vorrichtungen für OCT-Verfahren sind in der EP 2 159 535 A1, US 2011/0085136 A1, US 2007/0046948 A1 und die US 2008/0013078 A1 offenbart.

Aufgabe der Erfindung ist es daher, schnell und präzise eine Klassifizierung der in einer Verbindungsschicht auftretenden Defekte mit Hilfe des OCT-Verfahrens zu ermöglichen.

Diese Aufgabe wird mit dem Gegenstand des unabhängigen Anspruchs gelöst. Vorteilhafte Weiterbildungen der Erfindung ergeben sich aus den abhängigen Ansprüchen.

Erfindungsgemäß wird ein Prüfverfahren zum Prüfen einer Verbindungsschicht zwischen waferförmigen Proben unter Verwendung einer Prüfvorrichtung zum Prüfen einer Verbindungsschicht zwischen waferförmigen Proben angegeben. Die Prüfvorrichtung weist einen für ein OCT-Verfahren ausgebildeten Messkopf auf, der einen optischen Messstrahl auf einen Verbund aus mindestens zwei waferförmigen Proben mit dazwischen angeordneter Verbindungsschicht ausrichtet. Eine optische Strahlteiler-Ebene ist ausgebildet zum Abzweigen eines optischen Referenzstrahls als Referenzarm für Abstandsmessungen. Eine Auswerteeinheit ist ausgebildet zum Auswerten von Schichtdickenmessungen ohne Referenzarm und Abstandsmessungen mit Referenzarm. Eine optische Schalteinrichtung ist ausgebildet zum Zu- und Abschalten des Referenzarms.

Erfindungsgemäß weist das Prüfverfahren die nachfolgenden Verfahrensschritte auf. Zunächst wird ein flächiges Schichtdickenbild der Verbindungsschicht mittels des OCT- Verfahrens erstellt. Ein derartiges Schichtdickenbild lässt bereits Defektbereiche erkennen, die durch Einstellen eines Messkopfes auf einen der ermittelten Defektbereiche der Verbindungsschicht unter Verengen eines Tiefenmessbereichs auf wenige Interferenzmaxima näher untersucht werden kann.

Da es ungünstig ist, dünne Schichten mit einem Sensor mit großem Messbereich zu erfassen wird erstens wegen der groben Empfindlichkeit eines großen Messbereichs und zweitens durch die Unmöglichkeit eine Schichtdicke auszuwerten, die unterhalb von 2 Interferenzmaxima liegt, dieser zwar eingeengte, jedoch ausreichend große Messbereiche von wenigen Interferenzmaxima in vorteilhafter Weise bei dem Messverfahren eingesetzt. Dabei werden jedoch Schichtdickenmessspitzen und Abstandsmessspitzen der Intensität eines von einem Interferometer erzeugten Intensitätsbildes auf einen engen Bereich zusammengedrängt, was eine Klassifizierung der Intensitätsmessspitzen als Schichtdickenmessspitzen bzw. Schichtdicken-Peaks und als Abstandsmessspitzen bzw. Abstands-Peaks weiter erschwert.

Deshalb wird gemäß diesem Durchführungsbeispiel des Verfahrens zunächst ein Schichtdickenprofil entlang einer Messspur im Defektbereich mit weggeblendetem Referenzarm der Prüfvorrichtung vorgenommen und anschließend auf der gleichen Messspur ein Abstandsmessprofil mit zugeschaltetem Referenzarm der Prüfvorrichtung durchgeführt. Anschließend erfolgt ein Profilscan, bei dem abwechselnd eine Messung der Schichtdicke mit weggeblendetem Referenzarm und des Abstands mit zugeschaltetem Referenzarm an gleichen Scanpositionen auf der Messspur durchgeführt wird.

Die Auswerteeinheit wird dann ein Vergleichen des Profilscans mit dem Schichtdickenprofil und dem Abstandsprofil zur Klassifizierung der gemessenen Spitzenwerte als Dickenmesswerte oder Abstandmesswerte vornehmen. Mit diesem Verfahren werden in vorteilhafter Weise zunächst genaue Vorkenntnisse über den Schichtaufbau geschaffen, um dann die Lage der virtuellen Referenzebene ermittelt, um die detektierten Peaks richtig zuzuordnen zu können. Dabei wird sichergestellt, dass sich die Erwartungsbereiche nicht überlappen.

Die Prüfvorrichtung hat den Vorteil, dass schnell nacheinander Profile der Schichtdicke und Profile des Abstands gemessen werden können. Außerdem ist es möglich, einen Profilscan durchzuführen, der an gleichen Scanpositionen abwechselnd Schichtdicke und Abstand erfasst. Somit kann mithilfe dieser Vorrichtung sowohl eine genaue Vorkenntnis über den Schichtaufbau aus Verbindungsschicht zwischen waferförmigen Proben ermittelt werden und auch die Klassifizierung der Mess-Peaks eindeutig als Schichtdicken-Peaks einer Schichtdickenmessung und Abstands-Peaks einer Abstandsmessung klassifiziert werden.

Die Vorrichtung ist in vorteilhafter Weise in der Lage, den für eine Abstandsmessung des OCT-Verfahrens erforderlichen Referenzarm auszublenden, wenn Schichtdicken zu erfassen sind und wieder zuzuschalten wenn eine Abstandsmessung erfolgen soll. Darüber hinaus sollten bei der Prüfvorrichtung Astigmatismus- und Komaeffekte, die in einem konvergierenden Messstrahl, üblicherweise an einer Strahlteilerplatte auftreten können, vermieden werden und für die Abstandsmessung ein Astigmatismus- und Komaeffektfreier Referenzarm von dem Messstrahl abgezweigt werden.

Vorzugsweise wird als Strahlteiler in dem Messstrahl keine Strahlteilerplatte sondern ein Strahlteilerwürfel vorgesehen, mit dem die oben erwähnten optischen Nachteile überwunden werden können. Auch ist es möglich eine faseroptische Prüfvorrichtung zu schaffen bei der diese nachteiligen Effekte eines plattenförmigen optischen Strahlteilers in Form eines faseroptischen Zirkulators überwunden werden. Aus einem derartigen faseroptischen Zirkulator, in den das Licht einer Lichtquelle eingekoppelt wird, kann gleichzeitig Licht für den Messkopf und für den Referenzarm ausgekoppelt werden. Dazu sind Messkopf, Referenzarm und Lichtquelle mit dem Zirkulator verbunden.

Eine faseroptische Prüfvorrichtung hat darüber hinaus den Vorteil, dass der Messkopf entfernt von einer Auswerteeinheit mit Lichtquelle, Interferometer, Referenzarm, und optischer Schalteinrichtung für den Referenzarm und somit entfernt von dem eigentlichen Prüfobjekt angeordnet sein kann.

Ferner kann es vorgesehen werden, als optische Schalteinrichtung ein optisches Ablenkelement einzusetzen, das ausgebildet ist, den Referenzarm von der Strahlteiler-Ebene abzulenken. Dabei ist es von Vorteil, wenn das Ablenkelement nicht orthogonal zum Referenzstrahl ausgerichtet ist, sondern seine Flächennormale einen Winkel auf-weist, so dass eventuelle Reflexionen an der einer Oberfläche des Ablenkelements nicht in den Messstrahl selbst eingekoppelt werden kann, sondern vielmehr in einem unkritischen Bereich der Prüfvorrichtung abgelenkt werden.

Als optische Schalteinrichtung kann ein bistabiler elektrischer Schalter vorgesehen werden, der ausgebildet ist, eine Blende in den Referenzstrahl hinein und wieder heraus zu schieben oder eine Irisblende zu öffnen und zu schließen, jedoch gilt auch hier, dass die Flächennormalen der Blenden derart angeordnet werden, dass sie keine Anteile des Referenzstrahls zurück zu dem Strahlteiler leiten. Derartige Blenden haben den Vorteil gegenüber optischen Ablenkelementen, dass sie keine Schwenk- oder Schiebebewegungen ausüben und somit kürzere Abtastzeiten ermöglichen.

Als optische Schalteinrichtung kann eine optische Flüssigkristallsperre aufweisen. Flüssigkristalle ermöglichen nahezu trägheitslos ein optisches Abschalten des Referenzarms, indem durch Anlegen einer niedrigen elektrischen Spannung an eine Flüssigkristallstruktur die Fläche der Kristallstruktur ein Durchdringen des Referenzstrahls durch zwei zueinander gleichgeordnete Polarisationsfilter durch Drehen einer Polarisationsebene zwischen den Polarisationsfiltern verhindert.

Weiterhin ist es vorgesehen, dass die Prüfvorrichtung ein Umschaltmodul mit Messkopf und optischer Schalteinrichtung aufweist. Ein derartiges Modul hat den Vorteil eines kompakten Aufbaus, so dass die gesamte Prüfvorrichtung in einem einzigen Gehäuse über einem Prüfobjekt angeordnet werden kann. Weiterhin kann eine Prüfvorrichtung auch ein modifiziertes Michelson-Interferometer aufweisen, dessen Referenzarm durch die optische Schalteinrichtung ausblendbar ist und dessen freier optischer Arm zur Überwachung des Prüfobjekts eine Kamera oder ein Okular aufweisen kann. Ein derart modifiziertes Michelson-Interferometer, an das eine Auswerteeinheit des OCT-Verfahrens angeschlossen ist, kann relativ kostengünstig hergestellt werden und objektnah zum Prüfungsobjekt eingesetzt werden.

Demgegenüber können faseroptische Prüfvorrichtungen so gestaltet werden, dass sie fernab vom Prüfobjekt einen faseroptischen Referenzarm und eine Auswerteeinheit aufweisen. Dazu ist am Ausgang des Messkopfes beim Übergang zu einem faseroptischen Lichtwellenleiter eine halbdurchlässige Verspiegelungsschicht angeordnet, so dass ein Teil des in den Messkopf eingekoppelten Lichtstrahls über einen Lichtwellen- Verbindungsleiter und über einen Zirkulator in die Auswerteeinheit sowohl als auch in eine Vorrichtung mit faseroptischen Referenzarmen zurückgekoppelt wird.

Die faseroptischen Referenzarme weisen an ihren Enden vorzugsweise Faraday-Spiegel als faseroptische Reflektoren auf. Außerdem können im Bereich der vom Prüfobjekt entfernt angeordneten Auswerteeinheit mehrere faseroptische Referenzarme mit unterschiedlicher optischer Länge vorgesehen werden, die für unterschiedliche Abstandsmessungen vorprogrammiert sind. So können über den oben erwähnten faseroptischen Zirkulator unterschiedliche faseroptische Referenzarme mit dem Messkopf gekoppelt werden.

Auch kann ein faseroptischer Referenzarm ohne abschließende Verspiegelung der Lichtleiterfaser vorgesehen werden, so dass dieser als gesperrter Referenzarm wirkt, da sich in ihm keine reflektierte Welle für die Interferenz ausbilden kann. Derartigen unterschiedlichen faseroptischen Referenzarmen ist ein Faserumschalter vorgelagert, der vorprogrammiert zwischen den unterschiedlichen Referenzarmen und somit zwischen gesperrtem Referenzarm und Referenzarmen unterschiedlicher optischer Länge umschalten kann.

Darüber hinaus kann auch ein Faserkoppler vorgesehen sein, der einerseits einen fest installierten Referenzarm mit dem Zirkulator koppelt und andererseits den Faserumschalter mit dem Zirkulator koppeln kann. Durch das reflektierende Faserende am Messkopf werden damit Teilwellen, die an den faseroptischen Reflektoren der Referenzarme reflektiert werden, mit den optischen Messlängen des Messstrahls des Messkopfes reflektierend überlagert. Die dadurch entstehenden Referenzbilder werden schließlich von einem Spektrometer, das an den Zirkulator angeschlossen ist, ausgewertet.

Mit diesem Verfahren kann in vorteilhafter Weise eine Messgraphik zur Auswertung der Klassifizierung der Messwerte in Bezug auf einen Defektbereich einer Verbindungsschicht zwischen den waferförmigen Proben durchgeführt werden. Mittels der klassifizierten Schichtdicken- und Abstandsmessungen im Defektbereich kann schließlich eine Klassifizierung des Defekts als tolerierbarer Fremdstoffpartikel in der Verbindungsschicht oder als nicht tolerierbarer Hohlraum in der Verbindungsschicht erfolgen. Ergibt sich aus der Auswertung ein Hohlraum innerhalb der Verbindungsschicht, so kann ein derartiger Verbund aus Verbindungsschicht und waferförmigen Proben einem Dünnschleifverfahren nicht unterworfen werden. Vielmehr muss die Verbindungsschicht erneut lunkerfrei hergestellt werden.

Das Verfahren hat darüber hinaus den Vorteil, dass ein Ermitteln von Verwölbungen einer Oberfläche des Verbundes der zwei Proben mit der dazwischen angeordneten Verbindungsschicht durch Ermitteln von Abstandswerten zwischen dem Messkopf und der Oberfläche des Verbundes bei zugeschaltetem Referenzarm der Prüfvorrichtung erfolgen kann, ohne dass ein weiterer Verfahrensschritt erforderlich wird, da sich die Verwölbung automatisch aus der bereits erfolgten Abstandsprofilmessung ergibt.

Die Erfindung wird nun anhand der beigefügten Figuren näher erläutert.
- Figur 1: zeigt eine schematische Skizze einer ersten Prüfvorrichtung;
- Figur 2: zeigt eine schematische Skizze einer zweiten Prüfvorrichtung;
- Figur 3: zeigt eine schematische Skizze einer dritten Prüfvorrichtung;
- Figur 4: zeigt schematisch einen Aufbau einer Prüfvorrichtung gemäß Figur 1;
- Figur 5: zeigt schematisch ein Prüfergebnis einer Verbindungsschicht zwischen zwei Wafern;
- Figur 6: zeigt schematisch ein Prüfergebnis einer Verbindungsschicht im Bereich eines Defektes in der Verbindungsschicht.

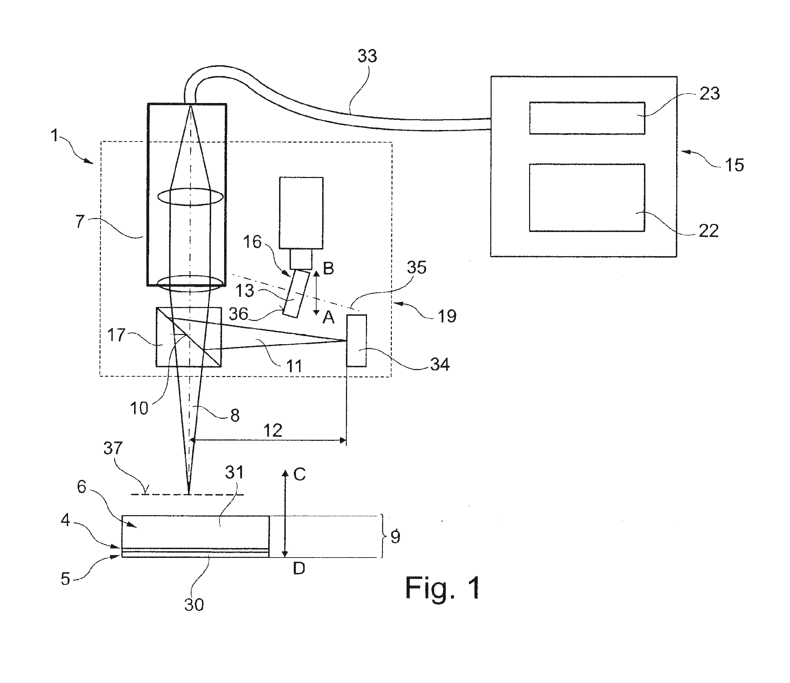

Figur 1 zeigt eine schematische Skizze einer ersten Prüfvorrichtung 1. Die Prüfvorrichtung 1 weist einen Messkopf 7 auf, der einen optischen Messstrahl 8 auf einen Verbund 9 richtet, wobei der Messstrahl 8 die Qualität einer Verbindungsschicht 4 zwischen zwei waferförmigen Proben 5 und 6 in Bezug auf Defekte erfasst.

Dazu wird aus dem Messstrahl 8 mithilfe eines Strahlteilerwürfels 17 ein optischer Referenzstrahl 11 ausgekoppelt, der in der Strahlteiler-Ebene 10 ein Referenzbild erzeugt, das über die Faserverbindung 33 zwischen dem Messkopf 7 und einer Auswerteeinheit 15 ausgewertet werden kann, wobei die Auswerteeinheit 15 ein Spektrometer 22 aufweist, welches das Interferenzbild bzw. das spektrale Interferenzmuster sowohl in Hinblick auf Intensitätsspitzen einer Schichtdickenerfassung als auch in Hinblick auf Intensitätsspitzen einer Abstandsmessung erfasst.

Dabei werden die Intensitätsspitzen der Schichtdicken allein durch die Interferenz der beiden Grenzflächen, welche an den Übergängen der Verbindungsschicht zu den waferförmigen Proben bildet werden, erzeugt. Die Intensitätsspitzen der Abstandsmessung werden durch Interferenzen auf der Strahlteiler-Ebene 10 zwischen Messstrahl 8 und Referenzstrahl 11 gebildet, wobei der Referenzstrahl 11 von einem Reflektor 34 am Ende eines Reflektorarms 12 auf die Strahlteiler-Ebene 10 projiziert wird. Die Zuordnung beziehungsweise Klassifikation der durch das Interferometer 22 erfassten Intensitätsspitzen der Schichtdickenmessung und der Abstandsmessung ist schwierig und bei dicht beieinander liegenden Intensitätsmaxima, wie es bei der Untersuchung von Defekten in Verbindungsschichten 4 auftritt, nicht eindeutig möglich.

Um diese Klassifikation beziehungsweise Zuordnung reproduzierbar zu verbessern, weist die Prüfvorrichtung 1 in einem Umschaltmodul 19 zusätzlich zu dem Messkopf 7 und dem Strahlteilerwürfel 17 für den Referenzarm 12 eine optische Schalteinrichtung 16 auf, die ein optisches Ablenkelement 13 in den Referenzarm 12 in Pfeilrichtung A hineinschiebt und in Pfeilrichtung B herauszieht. Somit können bei Messungen in der Position A Intensitätsspitzen der Schichtdickenmessung zugeordnet werden und in der Position B Intensitätsspitzen einer Überlagerung von Schichtdickenmessung und Abstandsmessung zugeordnet sein.

Durch einen entsprechenden Vergleich mithilfe der Auswerteeinheit 15 von Messungen mit Unterbrechung des Referenzstrahls 11 und Messungen ohne Unterbrechung des Referenzstrahls 11 kann dann eindeutig zwischen Schichtdickenspitzenwerten des reflektierten Intensitätsbildes und Intensitätsspitzen der Abstandsmessung unterschieden werden.

Um zu vermeiden, dass durch das optische Ablenkelement 13 beim Einfahren in den Referenzarm 12 Reflektionen von der Oberfläche des optischen Ablenkelements 13 auf die optische Strahlteiler-Ebene 10 treffen und damit das Messergebnis verfälschen, ist die Flächennormale 35 der Oberfläche 36 des optischen Ablenkelements 13 derart ausgerichtet, dass Reflektionen an der Oberfläche 36 des optischen Ablenkelements 13 auf einen unkritischen Bereich innerhalb des Umschaltmoduls 19 gerichtet sind und beim Einfahren in den Referenzarm 12 und in der Position des Referenzarms 12 nicht die optische Strahlteiler-Ebene 10 des Strahlteilerwürfels 17 tangieren. Damit unterscheidet sich die optische Schalteinrichtung 16 von der aus der obigen Druckschrift WO 2006/028926 A1 bekannten Drehscheibe mit Fasenschieber, der in dem dortigen Referenzarm angeordnet ist.

Wie in Figur 1 gezeigt, ist der Verbund aus einer Verbindungsschicht 4 zwischen zwei waferförmigen Proben 5 und 6 noch außerhalb der Messebene 37 angeordnet und kann mechanisch in Pfeilrichtung C in die Messebene 37 durch einen entsprechenden Messtisch verschoben werden, wobei der Verbund 9 aus einem Nutzwafer 30 und einem Trägerwafer 31 und dazwischen angeordneter, zu untersuchender Klebstoffschicht besteht. Der Messstrahl 8 kann durch den Trägerwafer 31 hindurch die Verbindungsschicht 4 erfassen. Diese Anordnung der waferförmigen Probe mit Verbindungsschicht 4 wird gewählt, weil ein Nutzwafer 30 möglicherweise optisch wirksame Schichten wie Metallisierungen oder hochdotierte Zonen aufweist, die zu Fehlinterpretationen in Bezug auf die Qualität der Verbindungsschicht 4 führen können. Der Trägerwafer kann hingegen entsprechend ausgewählt werden, damit er beispielsweise wie ein Siliziumwafer für eine Infrarotlichtquelle gleichmäßig transparent ist, sodass Defekte in der Verbindungsschicht 4 mit dieser in Figur 1 schematisch gezeigten Prüfvorrichtung erfasst werden können. Nach der Messung kann der Verbund 9 aus Verbindungsschicht 4 und waferförmigen Proben 5 und 6 in Pfeilrichtung D wieder aus der Messebene 37 herausgefahren werden oder bei Lunkerfreiheit der Verbindungsschicht 4 ein Dünnschleifen des Nutzwafers erfolgen. Über die Faserverbindung 33 wird zudem das Licht einer breitbandigen Lichtquelle 23 von der Auswerteeinheit 15 zu dem Messkopf 7 geleitet. Außerdem wurde in dieser Prüfvorrichtung 1 in der Strahlteiler-Ebene 10 keine halbdurchlässige Strahlteilerplatte eingesetzt, sondern ein Strahlteilerwürfel 17, um Astigmatismus- und Komaeffekte, die in einem konvergierenden Messstrahl bei Einsatz einer halbdurchlässigen Platte auftreten, zu vermeiden.

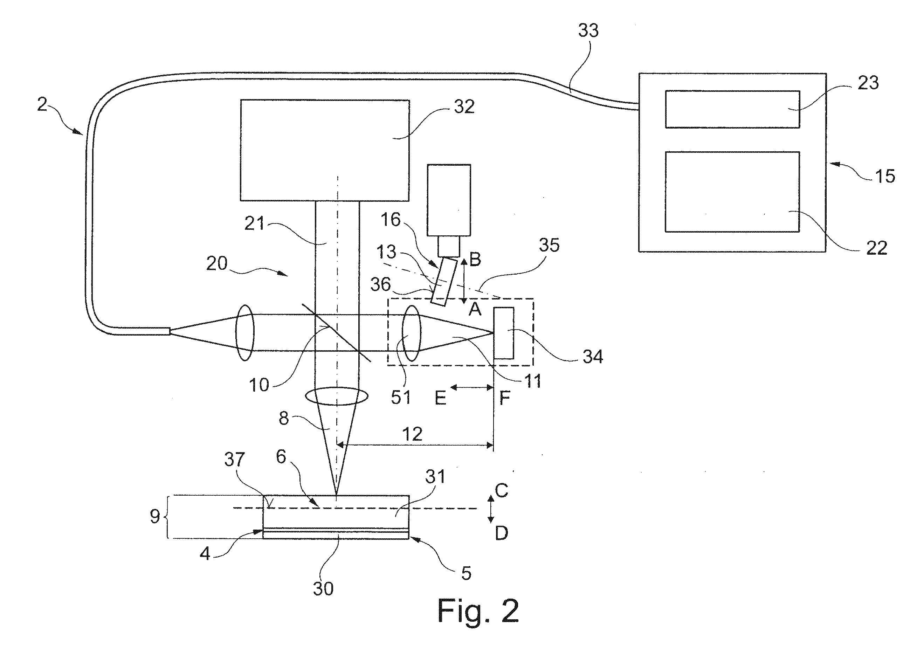

Figur 2 zeigt eine schematische Skizze einer zweiten Prüfvorrichtung 2. Komponenten mit gleichen Funktionen wie in Figur 1 werden mit gleichen Bezugszeichen gekennzeichnet und nicht extra erörtert.

Über die Faserverbindung 33 wird eine Lichtquelle in ein Michelson-Interferometer 20 geleitet. Das Michelson-Interferometer 20 unterscheidet sich von der ersten Ausführungsform gemäß Figur 1 dadurch, dass die Strahlteiler-Ebene 10 in einem Kollimatorbereich angeordnet ist, so dass als optischer Strahlenteiler ein halbdurchlässiger Spiegel beziehungsweise eine halbdurchlässige Spiegelplatte einge-setzt werden kann, da Astigmatismus- und Komaeffekte in einem Kollimatorbereich mit paralleler Strahlführung vernachlässigbar sind.

Außerdem unterscheidet sich das Michelson-Interferometer 20 von der Figur 1 dadurch, dass der Reflektor 34 in den Pfeilrichtungen E und F verschoben werden kann, womit eine Verlängerung und eine Verkürzung des Referenzarms 12 und damit eine Verschiebung der Messebene 37 in dem Messobjekt aus einem Verbund 9 einer Verbindungsschicht 4 zwischen waferförmigen Proben 5 und 6 zwischen den Pfeilrichtungen C und D ohne Höhenänderung des Probenhaltetisches in einem begrenzten Bereich möglich ist.

In einer weiteren Ausgestaltung können sowohl der Reflektor 34 als auch eine davor liegende Fokussierlinse 51 in den Pfeilrichtungen E und F verschoben werden. Dadurch können Verluste durch Defokussierung vermieden werden.

Das Michelson-Interferometer 20 weist für diese Prüfvorrichtung zusätzlich die bereits in Figur 1 gezeigte optische Schalteinrichtung 16 mit einem optischen Ablenkelement 13 auf. Die Oberfläche 36 ist nicht orthogonal zu dem Referenzstrahl 11 ausgerichtet, um das Messergebnis verfälschende Reflektionen des optischen Ablenkelements 13 zu vermeiden. Anstelle eines optischen Ablenkelements 13 können zum Abschalten des Referenzarms 12 auch andere Mittel eingesetzt werden, wie beispielsweise ein Flüssigkristallschirm, der mit Hilfe einer niedrigen Schaltspannung den optischen Pfad des Referenzarms unterbrechen oder einschalten kann. Auch ist es möglich, bei Verschlussblenden wie Irisblenden einzusetzen, wobei für die Vorrichtungen, die in Figur 1 und Figur 2 gezeigt werden, darauf zu achten ist, dass die Ausrichtung der Flächennormalen 35 der Blenden in einem Winkel zur Orthogonalen des Referenzstrahls angeordnet ist, um Verfälschungen des Messergebnisses durch Reflektionen an den geschlossenen Blenden zu vermeiden.

Da das Michelson-Interferometer 20, wie es Figur 2 zeigt, einen freien optischen Arm 21 aufweist, können über diesen freien optischen Arm 21 zusätzliche optische Mittel auf die Strahlteiler-Ebene 10 gerichtet werden, wie beispielsweise Mittel zum Einkoppeln eines Pilotlaserspots, der bei Infrarotmesslicht hilfreich ist, oder Mittel zur Einkopplung eines Messlichtes über eine externe Lichtquelle, die zur Einkopplung eines zweiten Schichtdickensensors zum Beispiel mit einem anderen Spektral- und Messbereich oder mit anderen Spotpositionen verwendet werden kann. Schließlich können auch zur Beobachtung des Objekts eine Kamera 32 oder ein Okular sowie Objektbeleuchtungen an den freien optischen Arm 21 des Michelson-Interferometers 20 angeschlossen werden.

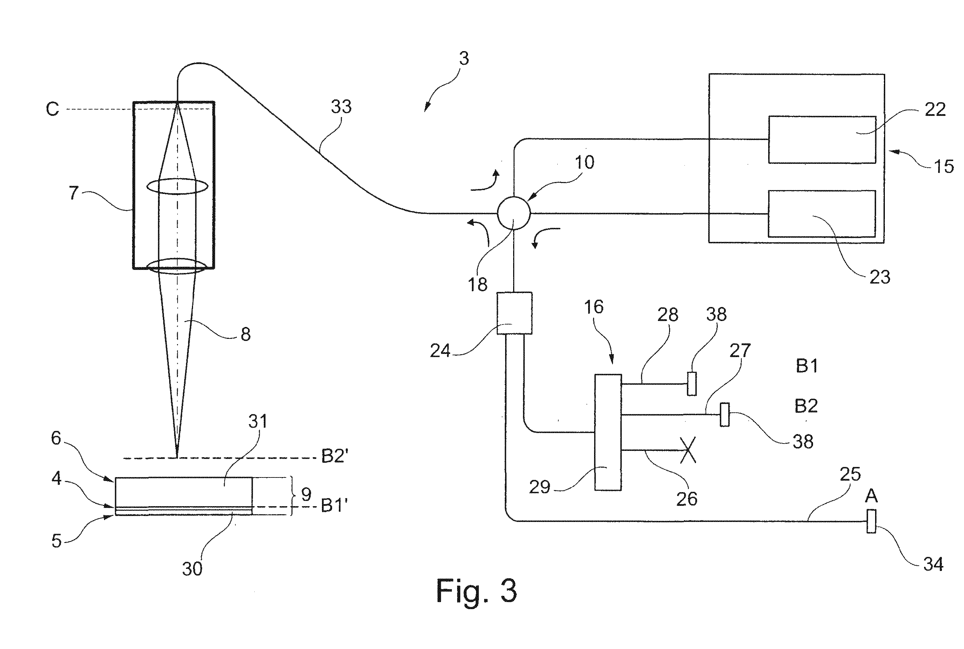

Figur 3 zeigt eine schematische Skizze einer dritten Prüfvorrichtung 3. Diese Prüfvorrichtung ist eine faseroptische Prüfvorrichtung und weist an einem Messlichteingang C des Messkopfes 7 am Übergang zu der faseroptischen Verbindung 33 einen halbdurchlässigen Reflektor auf. Dadurch ist es möglich, eine Strahlteilung, ein Anbringen oder Bereithalten eines Referenzarms sowie das Umschalten beziehungsweise Unterbrechen des Referenzarms fernab vom Messkopf 7 vorzusehen. Damit wird der Aufbau des Messkopfes 7 gegenüber den Vorrichtungen der Figur 1 und der Figur 2 vereinfacht.

Anstelle einer Strahlteiler-Ebene 10 wird nun ein faseroptischer Zirkulator 18 eingesetzt, der sowohl die Lichtquelle 23 der Auswerteeinheit 15 als auch das Interferometer 22 mit dem Messkopf 7 und einem Faserkoppler 24 verbindet. Der Faserkoppler 24 steht mit einerseits mit einem Faserumschalter 29 als optische Schalteinrichtung 16 in Verbindung und ist andererseits mit einem Reflektor-Spiegel 34 eines faseroptischen Referenzarms 25 koppelbar. Durch den Faserumschalter 29 besteht die Möglichkeit, faseroptische Referenzarme mit unterschiedlichen optischen Weglängen zuzuschalten, so dass ein derartiger Referenzarm mit einem Faraday-Reflektor 38 an seinem Ende B1 mit einer virtuellen Ebene B1', die in der Ebene der Verbindungsschicht 4 des Verbundes 9 liegt, Interferenzen bilden kann.

Ein Referenzsignal kann von dem Faraday-Reflektor 38 am Ende von B1 über den Faserumschalter 29, den Faserkoppler 24 und den Zirkulator 18 an das Interferometer 22 in der Auswerteeinheit 15 übermittelt werden. Außerdem besteht über den Faserumschalter 29 die Möglichkeit, zwischen einem Referenzarm 28 zu B1 oder einem Referenzarm 27 zu B2 oder auf einen gesperrten Referenzarm 26 umzuschalten. Der gesperrte Referenzarm übernimmt praktisch die Funktion des optischen Ablenkelements 13 in den Ausführungsformen der Figuren 1 und 2. Die optische Faser wird dazu in einen schwarzen reflexionsfreien Lichtabsorber eingeleitet. Der Vorteil dieser faseroptischen Prüfvorrichtung ist ein relativ kleiner Messkopf 7, der direkt vor Ort die Qualitätsuntersuchung der Verbindungsschicht vornehmen kann, ohne dass erschütterungsempfindliche Strahlteiler oder andere Zusatzelemente, wie das optische Ablenkelement am Messort vorzusehen sind.

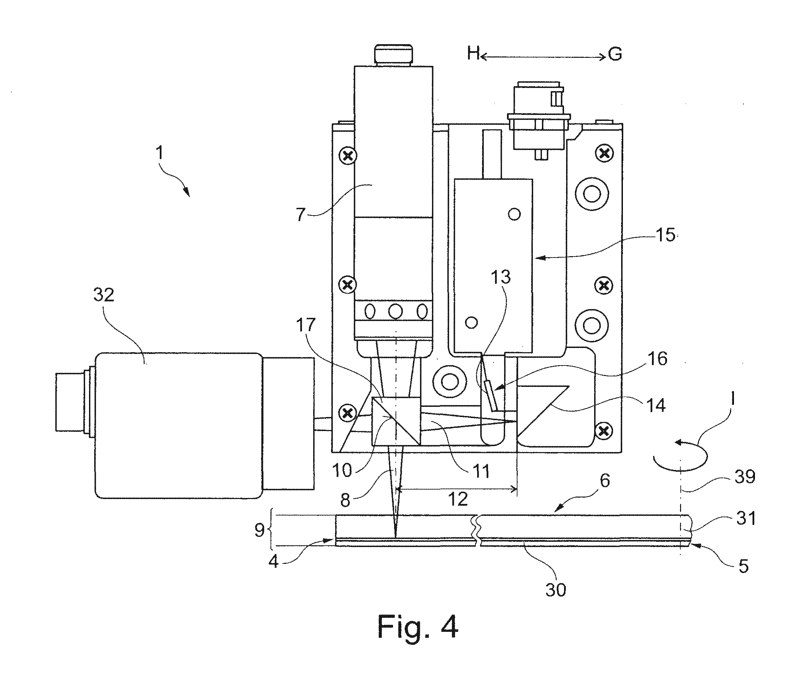

Figur 4 zeigt schematisch einen Aufbau einer Prüfvorrichtung 1 gemäß Figur 1. Dieser Aufbau enthält entgegen der faseroptischen Prüfvorrichtung vor Ort nicht nur den Messkopf 7, sondern auch die optische Schalteinrichtung 16, den Strahlteilerwürfel 17, den Referenzarm 12 mit einem Referenzspiegel 14 und somit einen relativ kompakten und raumgreifenden Aufbau. Dieser kann auch noch optional durch eine angeflanschte Kamera 32 ergänzt werden, um die Qualität der Verbindungsschicht 4 zwischen einem Trägerwafer 31 und einem Nutzwafer 30 aufzuzeichnen.

Ein derartiger Verbund aus Nutzwafer 30 und Trägerwafer 31 kann beispielsweise 300 mm Durchmesser aufweisen, wobei der scheibenförmige Verbund 9 auf einem Drehteller um eine Achse 39 in Pfeilrichtung I rotiert, während die Messvorrichtung 1 entweder in Pfeilrichtung G auf die Achse 39 zu oder in Pfeilrichtung H von der Achse 39 weg bewegt wird, so dass ein spiralförmiges Abtasten des scheibenförmigen Verbundes 9 erfolgen kann.

Bei einer Scanfrequenz von 4 kHz und einem Scanabstand von einem Millimeter sowohl in Umfangsrichtung als auch in radialer Richtung des scheibenförmigen Verbundes 9 kann eine Verbindungsschicht 4 innerhalb von etwa 70 Sekunden auf Defekte untersucht werden. Wird dieser Abtastabstand auf 0,25 mm verkleinert, sind für die Qualitätsprüfung eines scheibenförmigen Verbundes 9 von 300 mm Durchmesser eine Abtastgesamtzeit von nahezu 20 Minuten vorzusehen. Somit erscheint es sinnvoll mit einer ersten Schichtdickenmessung die gesamte Scheibe zu erfassen, um Defekte zu lokalisieren und anschließend diese Defekte intensiver mithilfe der in den Figuren 1 bis 4 gezeigten Möglichkeit eines Zu- und Abschaltens eines Referenzarms 12 näher zu untersuchen, um festzustellen, ob es sich lediglich um tolerierbare Fremdpartikel handelt, die in der Verbindungsschicht eingeschlossen sind, ohne den Verbund zu stören, oder ob es sich um Hohlräume handelt, die beispielsweise für ein Dünnschleifen eines Nutzwafers zu vermeiden sind.

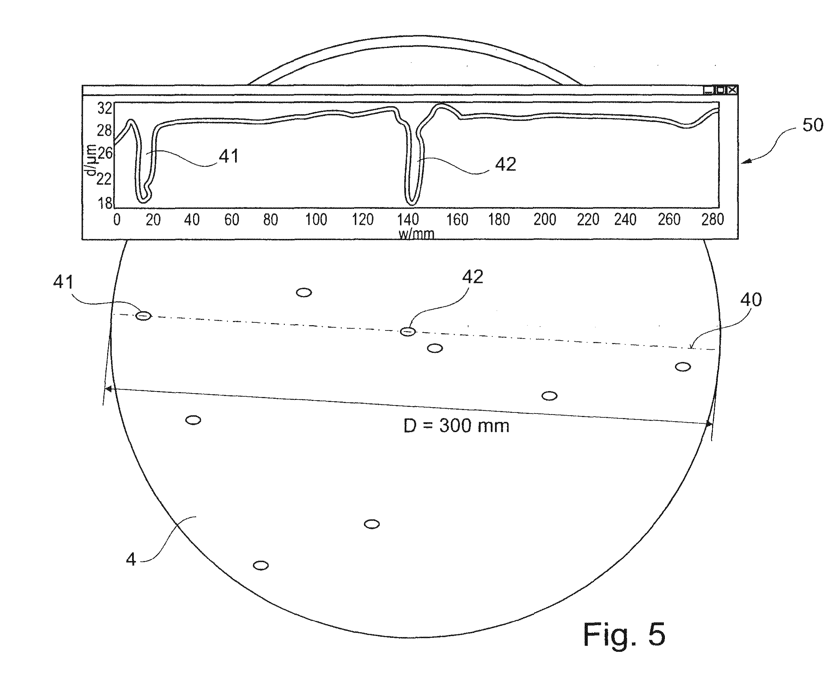

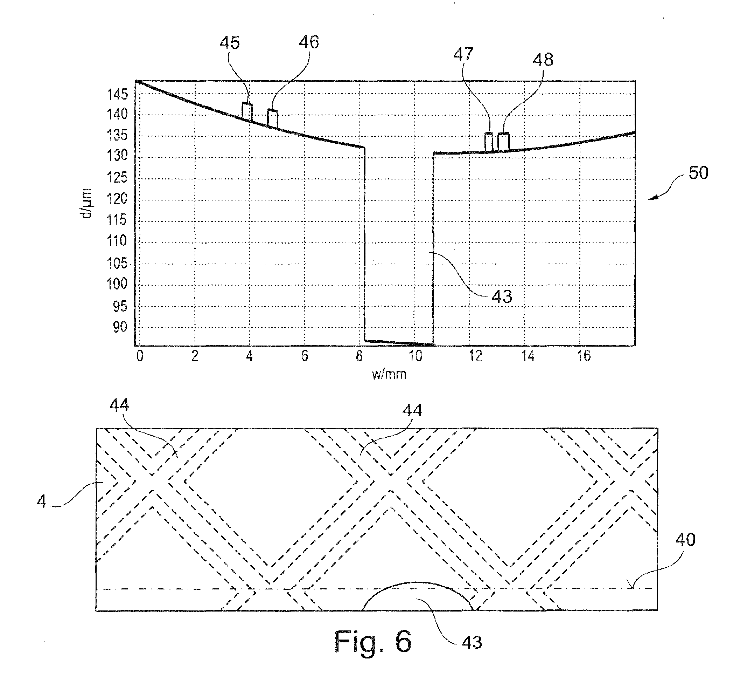

Die nachfolgenden Figuren 5 und 6 zeigen dazu Ergebnisse nach einer großflächigen, spiralförmigen Schichtdickenerfassung und Messergebnisse entlang einer im Detail zur Charakterisierung und Klassifizierung der Defekte durchgeführten Messspur durch zu untersuchende Defekte.

Figur 5 zeigt schematisch ein Prüfergebnis einer Verbindungsschicht 4 zwischen zwei Wafern mit deutlich erkennbaren Defekten nach einer spiralförmig durchgeführten Schichtdickenmessung eines Wafers mit einem Durchmesser D = 300 mm. Die Schichtdickenmessung zeigt bereits mehrere Defekte, beispielsweise den Defekt 41 und den Defekt 42, die näher zu untersuchen sind. Dazu werden nun die oben erwähnten Prüfvorrichtungen eingesetzt, die es ermöglichen, dank einer Messspur 40 genau zu klassifizieren, ob die Intensitätsmaxima des OCT-Verfahrens, die von dem Spektrometer erfasst werden, Spitzenwerte einer Abtastmessung oder Spitzenwerte einer Schichtdickenmessung darstellen, so dass die Schichtdicke klar von dem Abstand unterschieden werden kann und das in Figur 5 gezeigte Schichtdicken Diagramm ausgegeben werden kann. Auf der Abszisse ist dazu die Messposition w in Millimetern angegeben und Auf der Ordinale die Schichtdicke d in Mikrometern. Dieses Diagramm zeigt, dass die zwei Defekte 41 und 42 auf Hohlräume in der Verbindungsschicht zurückzuführen sind, da die Schichtdicke d in den Defektbereichen 41 und 42 von der durchschnittlichen Schichtdicke von etwa 30 µm auf unter 20 µm fällt.

Um die Messzeiten zu verkürzen, kann die Messspur 40 deutlich verkürzt werden, wie es die nachfolgende Figur 6 zeigt. Auch hier wird wieder die Schichtdicke einer relativ dicken Verbindungsschicht mit einer durchschnittlichen Dicke d von d > 130 µm entlang einer Weite w von etwa 17 mm untersucht und dabei ein Defekt 43 geschnitten, um festzustellen, ob es sich um einen tolerierbaren Fremdpartikeldefekt oder um einen Hohlraum handelt. Wie es das Auswerte-Diagramm 50 zeigt, ist der Defekt 43 von einem Hohlraum in der Verbindungsschicht 4 verursacht. Darüber hinaus sind regelmäßige quadratische Spuren 44 auf der Verbindungsschicht 4 zu erkennen, die Mesastrukturen 45, 46, 47 und 48 der Verbindungsschicht ausbilden. Die Mesastrukturen 45, 46, 47 und 48 der Verbindungsschicht zeigen, dass die quadratischen Spuren 44 vorbereitete Trennfugen in dem Nutzwafer widerspiegeln, die etwa 5 µm tief in den Nutzwafer eingebracht sind.

### Bezugszeichenliste

- 1: Prüfvorrichtung
- 2: Prüfvorrichtung
- 3: Prüfvorrichtung
- 4: Verbindungsschicht
- 5: erste Probe
- 6: zweite Probe
- 7: Messkopf
- 8: optischer Messstrahl
- 9: Verbund
- 10: optische Strahlteiler-Ebene
- 11: optischer Referenzstrahl
- 12: Referenzarm
- 13: optisches Ablenkelement
- 14: Referenzspiegel
- 15: Auswerteeinheit
- 16: optische Schalteinrichtung
- 17: Strahlteilerwürfel
- 18: Zirkulator (faseroptisch)
- 19: Umschaltmodul
- 20: Michelson-Interferometer
- 21: freier optischer Arm
- 22: Spektrometer
- 23: Lichtquelle
- 24: Faserkoppler
- 25: gesperrter Referenzarm
- 26: faseroptischer Referenzarm
- 27: faseroptischer Referenzarm
- 28: faseroptischer Arm
- 29: Faserumschalter
- 30: Nutzwafer
- 31: Trägerwafer
- 32: Zusatzgerät wie Kamera oder Okular
- 33: Faserverbindung
- 34: Reflektor
- 35: Flächennormale
- 36: Oberfläche
- 37: Messebene
- 38: Faraday-Reflektor
- 39: Achse
- 40: Messspur
- 41: Defekt
- 42: Defekt
- 43: Defekt
- 44: quadratische Spur
- 45: Mesastruktur
- 46: Mesastruktur
- 47: Mesastruktur
- 48: Mesastruktur
- 50: Diagramm
- 51: Fokussierlinse

## Patentansprüche

1. Prüfverfahren zum Prüfen einer Verbindungsschicht (4) zwischen waferförmigen Proben (5, 6) unter Verwendung einer Prüfvorrichtung (1, 2, 3) zum Prüfen einer Verbindungsschicht (4)zwischen waferförmigen Proben (5, 6), wobei die Prüfvorrichtung aufweist:
- einen Schichtdickenmesskopf (7), ausgebildet für ein OCT-Verfahren, der einen optischen Messstrahl (8) auf einen Verbund (9) aus mindestens zwei waferförmigen Proben (5, 6) mit dazwischen angeordneter Verbindungsschicht (4) richtet;
- eine optische Strahlteiler-Ebene (10), ausgebildet zum Abzweigen eines optischen Referenzstrahls (11) als Referenzarm (12) für Abstandsmessungen;
- eine Auswerteeinheit (15), ausgebildet zum Auswerten von Schichtdickenmessungen ohne Referenzarm (12) und Abstandsmessungen mit Referenzarm (12);
wobei eine optische Schalteinrichtung (16) ausgebildet ist zum Zu- und Abschalten des Referenzarms (12),
wobei das Prüfverfahren nachfolgende Verfahrensschritte aufweist:
- Ermitteln eines flächigen Schichtdickenbildes der Verbindungsschicht (4) mittels des OCT-Verfahrens;
- Einstellen des Schichtdickenmesskopfes (7) auf einen ermittelten Defektbereich der Verbindungsschicht (4) unter Verengen eines Tiefenmessbereichs auf weniger als 10 Interferenzmaxima;
- Aufnehmen eines Schichtdickenprofils entlang einer Messspur im Defektbereich mit weggeblendetem Referenzarm (12) der Prüfvorrichtung (1, 2, 3);
- Aufnehmen eines Abstandsmessprofils auf gleicher Messspur mit zugeschaltetem Referenzarm (12) der Prüfvorrichtung (1, 2, 3);
- Aufnehmen eines Profilscans mit abwechselnder Messung der Schichtdicke mit weggeblendetem Referenzarm (12) und des Abstands mit zugeschaltetem Referenzarm (12) an gleichen Scanpositionen auf der Messspur;
- Vergleichen des Profilscans mit dem Schichtdickenprofil und dem Abstandsprofil zur Klassifizierung gemessener Spitzenwerte als Dickenmesswerte oder Abstandmesswerte.

2. Verfahren nach Anspruch 1, wobei das Verfahren weiterhin ein Erstellen einer Messgraphik unter Auswertung der Klassifizierung der Messwerte in Bezug auf einen Defektbereich einer Verbindungsschicht (4) zwischen den waferförmigen Proben (5, 6) durchführt.

3. Verfahren nach Anspruch 1 oder Anspruch 2, wobei mittels der klassifizierten Schichtdicken- und Abstandsmessungen im Defektbereich eine Klassifizierung des Defektes als Fremdstoffpartikel in der Verbindungsschicht (4) oder als Hohlraum in der Verbindungsschicht (4) erfolgt.

4. Verfahren nach einem der Ansprüche 1 bis 3, wobei ein Ermitteln von Verwölbungen einer Oberfläche des Verbundes (9) der zwei Proben (5, 6) mit der dazwischen angeordneten Verbindungsschicht (4) durch Ermitteln von Abstandswerten zwischen dem Messkopf (7) und der Oberfläche des Verbundes bei zugeschaltetem Referenzarm (12) der Prüfvorrichtung (1, 2, 3) erfolgt.

## Claims

1. Test method for testing a connective layer (4) between wafer-shaped samples (5, 6) using a test device (1, 2, 3) for testing a connective layer (4) between wafer-shaped samples (5, 6), whereby the test device comprises:
- a layer thickness measuring head (7), designed for an OCT method, that directs an optical measuring beam (8) onto a composite (9) comprising at least two wafer-shaped samples (5, 6) between which is arranged a connective layer (4);
- an optical beam splitter plane (10) designed to divert an optical reference beam (11) as a reference arm (12) for distance measurements;
- an evaluation unit (15) designed to evaluate layer thickness measurements without the reference arm (12) and distance measurements with the reference arm (12);
whereby an optical switching device (16) is designed to switch on and off the reference arm (12),
whereby the test method comprises the following steps:
- determining a two-dimensional layer thickness image of the connective layer (4) by means of the OCT method;
- setting the layer thickness measurement head (7) to a determined defect region of the connective layer (4), narrowing a depth measurement region to less than 10 interference maxima;
- recording a layer thickness profile along a measurement track in the defect region with the reference arm (12) of the test device (1, 2, 3) masked;
- recording a distance measurement profile on the same measurement track with the reference arm (12) of the test device (1, 2, 3) switched on;
- recording a profile scan with alternating measurement of the layer thickness with the reference arm (12) masked and the distance with the reference arm (12) switched on at identical scan positions on the measurement track;
- comparison of the profile scan with the layer thickness profile and the distance profile to classify measured peak values as thickness measurement values or distance measurement values.

2. Method in accordance with claim 1, wherein the method further performs a creation of a measurement graphic by evaluating the classification of the measurement values in relation to a defect range of a connective layer (4) between the wafer-shaped samples (5, 6).

3. Method in accordance with claim 1 or 2, wherein in the defect region the defect is classified as a foreign matter particle in the connective layer (4) or as a cavity in the connective layer (4) by means of the classified layer thickness and distance measurements.

4. Method in accordance with one of claims 1 to 3, wherein warping of a surface of the composite (9) of the two samples (5, 6) with the connective layer (4) arranged between them are determined by determining distance values between the measuring head (7) and the surface of the composite with the reference arm (12) of the test device (1, 2, 3) switched on.

## Revendications

1. Procédé de contrôle destiné à contrôler une couche de liaison (4) entre des échantillons (5, 6) en forme de tranches à l'aide d'un dispositif de contrôle (1, 2, 3) destiné à contrôler la couche de liaison (4) disposée entre des échantillons en forme de tranches (5, 6), le dispositif de contrôle comprenant :
- une tête (7) de mesure d'épaisseur de couche conçue pour exécuter un procédé OCT qui dirige un rayon de mesure optique (8) sur un composite (9) comprenant au moins deux échantillons en forme de tranches (5, 6), la couche de liaison (4) étant disposée entre eux ;
- un plan (10) de séparateur de faisceau optique, conçu pour séparer un rayon de référence (11) optique en tant que bras de référence (12) pour les mesures de distance ;
- une unité d'évaluation (15) conçue pour évaluer les mesures d'épaisseur de couche sans bras de référence (12) et des mesures de distance à l'aide du bras de référence (12) ;
- un dispositif de commutation (16) optique étant conçu pour activer et désactiver le bras de référence (12), le procédé de contrôle comprenant les étapes de procédé suivantes :
- déterminer une image d'épaisseur de couche plate de la couche de liaison (4) selon le procédé OCT ;
- régler la tête (7) de mesure d'épaisseur de couche sur une zone de défaut définie de la couche de liaison (4) par rétrécissement d'une zone de mesure de profondeur sur une valeur d'interférence maximum inférieure à 10 ;
- enregistrer un profil d'épaisseur de couche le long d'une piste de mesure dans la zone de défaut à l'aide du bras de référence (12) masqué du dispositif de contrôle (1, 2, 3) ;
- enregistrer un profil de mesure de distance sur une piste de mesure identique à l'aide du bras de référence (12) activé du dispositif de contrôle (1, 2, 3) ;
- enregistrer un balayage de profil ayant une mesure variable de l'épaisseur de couche à l'aide du bras de référence (12) masqué et de la distance à l'aide du bras de référence activé (12) dans des positions de balayage identiques sur la piste de mesure ;
- comparer le balayage de profil avec le profil d'épaisseur de couche et le profil de distance afin de classer, les valeurs de crête mesurées en tant que valeurs de mesure d'épaisseur ou valeurs de mesure de distance.

2. Procédé selon la revendication 1, le procédé procédant en outre à la génération d'un graphique de mesure par évaluation de la classification des valeurs de mesure par référence à une zone de défaut d'une couche de liaison (4) entre les échantillons en forme de tranches (5, 6).

3. Procédé selon la revendication 1 ou la revendication 2, les mesures d'épaisseur de couche et les mesures de distance dans la zone de défaut permettant d'effectuer une classification du défaut en tant que particule de corps étranger dans la couche de liaison (4) ou en tant qu'espace creux dans la couche de liaison (4).

4. Procédé selon l'une quelconque des revendications 1 à 3, une détermination de gauchissement d'une surface du composite (9) des deux échantillons (5, 6), la couche de liaison (4) étant disposée entre les deux, s'effectuant par détermination des valeurs de distance entre la tête de mesure (7) et la surface du composite lorsque le bras de référence (12) du dispositif de contrôle (1, 2, 3) est activé.
